Europäisches Patentamt

European Patent Office

Office européen des brevets

(11) Numéro de publication : **0 058 280**
**B1**

(12) **FASCICULE DE BREVET EUROPÉEN**

(45) Date de publication du fascicule du brevet :
26.06.85

(21) Numéro de dépôt : **81401111.0**

(22) Date de dépôt : **09.07.81**

(51) Int. Cl.⁴ : **F 16 B 15/00**

(54) **Agrafe perfectionnée notamment pour le bois.**

(30) Priorité : **16.02.81 FR 8102957**

(43) Date de publication de la demande :
**25.08.82 Bulletin 82/34**

(45) Mention de la délivrance du brevet :
**26.06.85 Bulletin 85/26**

(84) Etats contractants désignés :
**AT BE CH DE GB IT LI LU NL SE**

(56) Documents cités :
**BE-A- 404 994**
**FR-A- 550 179**
**FR-A- 2 122 842**
**FR-A- 2 272 628**
**FR-A- 2 318 715**
**US-A- 2 741 147**

(73) Titulaire : **Cassese, Antoine**
**Les Essarts No 7 Saint Germain Laxis**
**F-77950 Maincy (FR)**

(72) Inventeur : **Cassese, Antoine**
**Les Essarts No 7 Saint Germain Laxis**
**F-77950 Maincy (FR)**

(74) Mandataire : **Casanova, André et al**
**CABINET ARMENGAUD JEUNE CASANOVA, AKER-
MAN, LEPEUDRY 23 boulevard de Strasbourg**
**F-75010 Paris (FR)**

Jouve, 18, rue St-Denis, 75001 Paris, France

## Description

La présente invention concerne des agrafes perfectionnées notamment pour bois. En particulier ces agrafes sont destinées à l'agrafage des cadres de bois tels que ceux qui entourent les tableaux.

Des agrafes de ce type ont été décrites, par exemple, dans les demandes de brevets français n° 74 18410 et n° 75 22814 publiées respectivement sous les n° 2 272 628 et n° 2 318 715. Cette dernière demande est notamment relative à une afrage qui consiste en une lamelle métallique pliée en deux au voisinage de sa partie médiane dont l'un des bords horizontaux présente une partie biseautée formée à partir de la face intérieure de l'agrafe et dont les bords verticaux sont repliés extérieurement en direction de l'axe de pliage. Une telle agrafe est d'épaisseur suffisamment faible pour ne pas fendre le cadre.

Les dispositifs d'agrafage susceptibles d'utiliser de telles agrafes comprennent un magasin dans lequel sont disposées ces agrafes. Ce magasin comporte une tige-poussoir actionnée par des moyens de pression afin de pousser les agrafes au fur et à mesure de leur utilisation. Il a été observé que de tels dispositifs étaient sujets à des incidents de fonctionnement car des agrafes se présentaient de façon non correcte à l'extrémité du magasin : ceci entraîne un arrêt du dispositif d'agrafage afin d'intervenir sur le magasin et par suite une perte de temps non négligeable.

Il est bien évident que de tels incidents se produisent également avec des agrafes ayant une face plane de dimension non négligeable.

Aussi un des buts de la présente invention est-il de fournir une agrafe ne provoquant aucun incident au cours de sa distribution.

Un objet de l'invention est une agrafe de ce type dont le coût de fabrication ne soit pas supérieur à celui des agrafes traditionnelles.

Ce but et cet objet, ainsi que d'autres qui apparaîtront par la suite, sont atteints par une agrafe perfectionnée selon la revendication 1. Des modes préférés de réalisation apparaissent dans les revendications 2 à 5.

De préférence la protubérance est située dans la zone médiane de la lamelle.

Avantageusement cette protubérance est constituée par un renflement.

Selon un mode préféré de réalisation, cette protubérance est constituée par deux lèvres situées de part et d'autre d'une saignée ménagée dans la lamelle.

La description qui va suivre et qui ne présente aucun caractère limitatif, doit être lue en regard des figures annexées parmi lesquelles :

La figure 1 représente une agrafe selon la présente invention ;

La figure 2 qui est une coupe transversale selon la ligne II-II de la figure 1, représente un premier mode de réalisation ;

La figure 3 qui est une coupe transversale selon la ligne II-II de la figure 1, représente un autre mode de réalisation de l'invention.

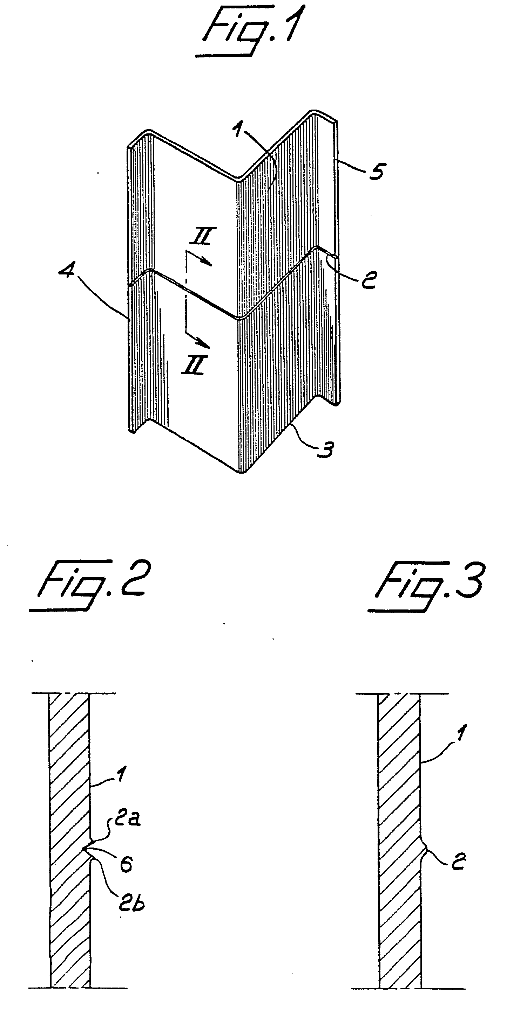

Ainsi qu'on peut le voir sur la figure 1 une agrafe selon la présente invention consiste en une lamelle métallique dont le dos 1 comporte une protubérance 2 qui est située dans la zone médiane de la lamelle. Cette lamelle peut être du type décrit dans la demande de brevet français n° 75 22814 : elle est pliée en deux au voisinage de sa partie médiane et l'un des bords horizontaux 3 présente une partie biseautée formée à partir de la face inférieure de l'agrafe tandis que les bords parallèles à la direction d'enfoncement 4 et 5 sont repliés extérieurement en direction de l'axe de pliage.

La protubérance 2 peut consister, comme représenté sur la figure 3 en un bourrelet faisant à peine saillie à la face dorsale 1 de l'agrafe.

Selon un mode de réalisation préféré de l'invention, cette protubérance 2 est constituée par deux lèvres 2a et 2b disposées de part et d'autre d'une saignée 6. En effet si on effectue sur le dos de la lamelle métallique constituant l'agrafe une saignée au moyen par exemple d'une pointe d'outil, on engendre la formation de deux lèvres le long de cette saignée.

Si on dispose les agrafes selon la présente invention dans un magasin tels que ceux décrits ci-dessus, ces agrafes viennent se positionner correctement en face du dispositif de distribution : en effet sous l'action de la tige-poussoir et du fait de la présence de cette protubérance sur la face dorsale de ces agrafes, l'agrafe qui est au niveau du dispositif de distribution ne peut que prendre une position correcte.

Bien que la présente invention ait été décrite pour des agrafes telles que celles faisant l'objet de la demande de brevet français n° 75 22814, il est bien évident qu'elle peut être appliquée à toutes sortes d'agrafes pourvu que celles-ci consistent en une lamelle dont la face de plus grandes dimensions est parallèle à la direction d'enfoncement de ladite lamelle.

## Revendications

1. Agrafe perfectionnée notamment pour le bois consistant en une lamelle métallique dont la face de plus grandes dimensions est parallèle à la direction d'enfoncement de ladite lamelle, caractérisée par le fait que ladite lamelle comporte une protubérance (2) allongée et s'étendant perpendiculairement à la direction d'enfoncement de ladite lamelle.

2. Agrafe selon la revendication 1, caractérisée par le fait que ladite protubérance (2) est située sensiblement au milieu de la hauteur de ladite lamelle.

3. Agrafe selon la revendication 1 ou 2, caractérisée par le fait que ladite protubérance (2) est constituée par un renflement.

4. Agrafe selon la revendication 1 ou 2, caractérisée par le fait que ladite protubérance est constituée par deux lèvres (2a) et (2b) situées de part et d'autre d'une saignée (6) ménagée dans ladite lamelle.

5. Agrafe selon la revendication 1, caractérisée par le fait que ladite lamelle métallique est pliée au voisinage de son axe parallèle à la direction de son enfoncement, dont un bord (3) perpendiculaire à ladite direction présente une partie biseautée et dont les bords parallèles (4) et (5) audit axe sont repliés extérieurement en direction de cet axe.

**Claims**

1. Improved clamp nail particularly for timber, consisting in a metal plate, of which the face of largest dimensions is parallel to the direction of penetration of said plate, characterized in that said plate comprises an elongated protuberance 2 extending perpendicularly to the direction of penetration of said plate.

2. Clamp nail according to Claim 1, characterized in that said protuberance 2 is located substantially at the centre of the height of said plate.

3. Clamp nail according to Claim 1 or 2, characterized in that said protuberance is constituted by a swelling.

4. Clamp nail according to Claim 1 or 2, characterized in that said protuberance is constituted by two lips 2a and 2b located on either side of a notch 6 made in said plate.

5. Clamp nail according to Claim 1, characterized in that said metal plate is bent in the vicinity of its axis parallel to the direction of its penetration, of which one edge 3, perpendicular to said direction, presents a bevelled part and of which the edges 4 and 5 parallel to said axis are bent outwardly in the direction of this axis.

**Patentansprüche**

1. Klammer, die insbesondere für Holz geeignet ist und aus einem Metallblättchen besteht, dessen Seite mit den größeren Abmessungen sich parallel zur Eintreibrichtung des Blättchens erstreckt, dadurch gekennzeichnet, daß das Blättchen eine längliche Ausstülpung (2) aufweist, die sich senkrecht zur Eintreibrichtung des Blättchens erstreckt.

2. Klammer nach Anspruch 1, dadurch gekennzeichnet, daß die Ausstülpung (2) etwa auf mittlerer Höhe des Blättchens verläuft.

3. Klammer nach Anspruch 1 oder 2, dadurch gekennzeichnet, daß die Ausstülpung (2) durch einen Wulst gebildet ist.

4. Klammer nach Anspruch 1 oder 2, dadurch gekennzeichnet, daß die Ausstülpung durch zwei Lippen (2a) und (2b) gebildet ist, die beidseits eines in dem Blättchen angebrachten Schnittes (6) verlaufen.

5. Klammer nach Anspruch 1, dadurch gekennzeichnet, daß das Metallblättchen nahe seiner zur Eintreibrichtung parallelen Achse gefaltet ist und daß ein senkrecht zu dieser Richtung verlaufender Rand (3) einen abgeschrägten Teil bildet, während die zu dieser Achse parallelen Ränder (4) und (5) bezüglich dieser Achse nach außen abgebogen sind.

*Fig.1*

*Fig.2*

*Fig.3*